# EUROPEAN PATENT SPECIFICATION

(11) **EP 4 053 858 B1**
(45) Date of publication and mention of the grant of the patent: **15.05.2024**
(21) Application number: 22170193.1
(22) Date of filing: 23.10.2018
(51) Int. Cl.: H01B 7/295, H01B 3/18, B32B 27/06, B32B 27/18, B32B 7/02, B32B 27/08, B32B 27/28, B32B 27/36, B32B 27/32

(54) **INSULATING COMPOSITE FILM AND ELECTRICAL COMPONENT**
ISOLIERVERBUNDFOLIE UND ELEKTRISCHES BAUTEIL
FILM COMPOSITE ISOLANT ET COMPOSANT ELECTRIQUE

(30) Priority: 30.10.2017 CN 201711042237; 30.09.2018 CN 201811155929; 30.09.2018 CN 201821610783 U
(43) Date of publication of application: 07.09.2022
(62) Divisional of application: 18797507.3
(73) Proprietor: Illinois Tool Works, Inc., Glenview, Illinois 60025 (US)
(72) Inventor: YANG, Chunhua, Glenview, 60025 (US); LIAO, Hongchuan, Glenview, 60025 (US)
(74) Representative: HGF

(56) References cited:
- EP-A2- 0 248 208
- CN-A- 103 854 813
- US-A1- 2011 236 662
- US-A1- 2014 272 115
- US-A1- 2015 373 853
- DRACHEV A I ET AL: "Multi-layer epoxy-based composite material containing pet film for electrical insulation", PROCEEDINGS OF THE ELECTRICAL INSULATION CONFERENCE AND ELECTRICAL MANUFACTURING AND COIL WINDING CONFERENCE. (COMBINED CONFERENCE). INDINAPOLIS, IN, SEPT. 23 - 25, 2003; [PROCEEDINGS OF THE ELECTRICAL ELECTRONICS INSULATION CONFERENCE AND ELECTRICAL, 23 September 2003 (2003-09-23), pages 609-612, XP010670721, DOI: 10.1109/EICEMC.2003.1247958 ISBN: 978-0-7803-7935-0

## Description

### Technical Field

The present application relates to an insulating composite film, and in particular to an insulating composite film having excellent puncture resistance performance.

### Background Art

Insulating films are used to isolate various types of electronic devices or components to avoid failure due to short circuit, breakdown, etc. between electronic devices or components, or electronic elements in electronic devices or components, and reduce the risk of fire from electronic devices or components, thus ensuring the normal operation of various types of electronic elements. For different uses of the insulating films, the insulating films are required to have different operating characteristics. For example, when applied to certain electronic devices or components, the insulating films are required to have better puncture resistance performance, so that the insulating films are not easily punctured when subjected to the impact of an external force.

US 2014/272115 discusses cables having a conductor with a polymeric covering layer and a non-extruded coating layer made of a material based on a liquid composition including a polymer resin and a fire retardant. Therefore, it is desirable to provide an insulating film having excellent performance.

### Summary of the Invention

It is an object of the present application to provide an insulating composite film which, in the case of a small thickness, still has better puncture resistance performance and at the same time satisfies the performance requirements of insulation and flame retardancy.

According to an unclaimed embodiment, there is provided an insulating composite film comprising:
an upper film layer, made of at least one of PP, PC, and PET materials;
a lower film layer, made of at least one of PP, PC, and PET materials; and
an intermediate film layer located between the upper film layer and the lower film layer, made of a high-hardness thermoplastic resin,
wherein the upper surface of the intermediate film layer and the lower surface of the upper film layer are bonded together, and the lower surface of the intermediate film layer and the upper surface of the lower film layer are bonded together.

For the film as described above, the high-hardness thermoplastic resin is selected from PMMA, high-hardness PC or PAR.

For the film as described above, the thickness of the intermediate film layer comprises 6%-20% of the total thickness of the film.

For the film as described above, the film has a total thickness of 0.1 mm-1.0 mm.

For the film as described above, the film is made by an extrusion molding process.

For the film as described above, the upper film layer and/or the lower film layer contains a flame retardant, and the flame retardant is a halogen-containing flame retardant selected from a bromine-containing flame retardant or a chlorine-containing flame retardant, or is a halogen-free flame retardant selected from a phosphorus-containing flame retardant, a nitrogen-containing flame retardant, a sulfonate flame retardant, or a silicon-containing flame retardant.

According to an unclaimed embodiment, there is provided an insulating composite film comprising at least two layers,
the at least two layers include at least one layer made of at least one of PP, PC, and PET materials, and
the at least two layers include at least one layer made of a high-hardness thermoplastic resin.

For the film as described above, the high-hardness thermoplastic resin is selected from PMMA, high-hardness PC or PAR.

For the film as described above, the film has a total thickness of 0.1 mm-1.0 mm.

For the film as described above, the film is made by an extrusion molding process.

For the film as described above, at least one of the layers made of at least one of PP, PC, and PET materials contains a flame retardant, and the flame retardant is a halogen-containing flame retardant selected from a bromine-containing flame retardant or a chlorine-containing flame retardant, or is a halogen-free flame retardant selected from a phosphorus-containing flame retardant, a nitrogen-containing flame retardant, a sulfonate flame retardant, or a silicon-containing flame retardant.

According to a first aspect of the claimed invention, there is provided an insulating composite film according to the appended claims. The an insulating composite film comprising:
a film base made of at least one of PP, PC, and PET materials; and
a coating layer formed by coating a high-hardness thermosetting material on an upper surface of the film base.

For the film as described above, the high-hardness thermosetting material is selected from epoxy resins, acrylate resins, urethane resins, and phenolic resins.

For the film as described above, the film base has a structure of one or more layers.

For the film as described above, at least one layer of the film base contains a flame retardant, and the flame retardant is a halogen-containing flame retardant selected from a bromine-containing flame retardant or a chlorine-containing flame retardant, or is a halogen-free flame retardant selected from a phosphorus-containing flame retardant, a nitrogen-containing flame retardant, a sulfonate flame retardant, or a silicon-containing flame retardant.

For the film as described above, when the film base has a three-layer structure, the thickness of the intermediate layer of the film base is 30-50% of the total thickness of the film base.

For the film as described above, the film base has a thickness of 0.1 mm-0.25 mm.

For the film as described above, the coating layer has a thickness of 3 µm-7 µm.

According to an unclaimed embodiment, there is provided an electrical component which comprises a casing and a printed circuit board located within the casing, electronic elements and line components are mounted on the printed circuit board, and the printed circuit board is surrounded or partially surrounded by an insulating composite film, characterized in that the insulating composite film comprises:
an upper film layer, made of PP, PC or PET material;
a lower film layer, made of at least one of PP, PC or PET material; and
an intermediate film layer located between the upper film layer and the lower film layer, made of a high-hardness thermoplastic resin,
wherein the upper surface of the intermediate film layer and the lower surface of the upper film layer are bonded together, and the lower surface of the intermediate film layer and the upper surface of the lower film layer are bonded together.

For the electrical component as described above, the electrical component is a power adapter or a power supply.

According to an unclaimed embodiment, there is provided an electrical component according to the appended claims. The electrical component comprises a casing and a printed circuit board located within the casing, electronic elements and line components are mounted on the printed circuit board, and the printed circuit board is surrounded or partially surrounded by an insulating composite film, characterized in that the insulating composite film comprises at least two layers, the at least two layers include at least one layer made of PP, PC or PET materials, and the at least two layers include at least one other layer made of a high-hardness thermoplastic resin.

For the electrical component as described above, the electrical component is a power adapter or a power supply.

According to a second aspect of the claimed invention, there is provided an electrical component which comprises a casing and a printed circuit board located within the casing, electronic elements and line components are mounted on the printed circuit board, and the printed circuit board is surrounded or partially surrounded by an insulating composite film, characterized in that the insulating composite film comprises:
a film base, made of PP, PC or PET material; and
a coating layer formed by coating a high-hardness thermosetting material on an upper surface of the film base.

For the electrical component as described above, the electrical component is a power adapter or a power supply.

The insulating composite film in the present application has good insulation and flame retardant performance, and thus can be used in electronic devices or components, and since the insulating composite film of the present application has a small thickness, the insulating composite film of the present application enables the structure of electronic devices or components to be compact, and since the insulating composite film of the present application has good puncture resistance, when the electronic devices or components are impacted by a certain external force, the insulating composite film will not be punctured thereby affecting the insulation performance thereof.

### Brief Description of the Drawings

These and other features and advantages of the present invention will be better understood upon reading the following detailed description with reference to the accompanying drawings, and identical reference numerals denote identical parts throughout the drawings, in which:
FIG. 1 is a schematic cross-sectional view of an insulating composite film according to an embodiment of the present application;
FIG. 2 is a schematic cross-sectional view of an insulating composite film according to a second embodiment of the present application;
FIG. 3 is a schematic cross-sectional view of an insulating composite film according to a third embodiment of the present application;
FIG. 4 is a schematic cross-sectional view of an insulating composite film according to a fourth embodiment of the present application;
FIG. 5 is a schematic view showing an extrusion molding process for producing an insulating composite film having a three-layer structure according to the present application;
FIG. 6 is a schematic view showing another extrusion molding for producing an insulating composite film having a three-layer structure according to the present application;
FIGS. 7A and 7B show the structure of an electrical component (such as a power adapter or power supply) 700.

### Detailed Description of Embodiments

The detailed description of various embodiments of the present application will be described below with reference to the drawings which constitute a part of the specification. It should be understood that although the terms indicating directions, such as "front", "back", "upper", "lower", "left" and "right", are used in the present application for directional or orientational description of various example structural parts and elements of the present application, these terms are used herein for ease of illustration purpose only, and are determined based on the example orientation shown in the drawings. Since the embodiments disclosed in the present application may be arranged according to different directions, these terms indicating directions are merely illustrative and are not to be considered as limiting. In the following drawings, the same parts are indicated by the same reference numerals, and similar parts are indicated by similar reference numerals, so as to avoid repeated description.

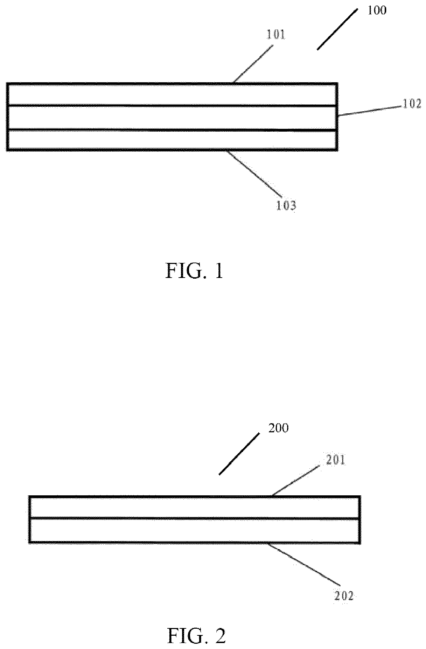

FIG. 1 is a schematic cross-sectional view of an insulating composite film 100 according to an embodiment of the present application.

As shown in FIG. 1, the film 100 comprises an upper film layer 101, an intermediate film layer 102, and a lower film layer 103 which are bonded together in a stacking manner by an extrusion molding process. The upper film layer 101 and the lower film layer 103 are made of a thermoplastic material. The inventors have found that when the upper film layer 101 and the lower film layer 103 are made of at least one of polypropylene (PP), polycarbonate (PC) or polyethylene terephthalate (PET), the film 100 has good insulation performance. The materials used to prepare the upper film layer 101 and the lower film layer 103 may be the same or different. As an example, both the upper film layer 101 and the lower film layer 103 are made of PC resin. The flame retardant may be chosen to be added or not added to the resin materials of the upper film layer 101 and the lower film layer 103. When the upper film layer 101 and/or the lower film layer 103 contain(s) a flame retardant, the flame retardant may be a halogen-containing flame retardant or a halogen-free flame retardant. In one embodiment, the halogen-containing flame retardant may be a bromine-containing flame retardant or a chlorine-containing flame retardant. In one embodiment, the halogen-free flame retardant may be a phosphorus-containing flame retardant, a nitrogen-containing flame retardant, a sulfonate flame retardant, or a silicon-containing flame retardant. In the case where the flame retardant is added to the resin materials of the upper film layer 101 and/or the lower film layer 103, the film 100 still meets Rohs' standard requirements. The film 100 can be applied to electrical and electronic equipment such as a portion of a circuit board surface of a power adapter requiring insulation. No flame retardant may be added to the film based on the requirements of use environment.

As also shown in FIG. 1, the intermediate film layer 102 is located between the upper film layer 101 and the lower film layer 103, the upper surface of the intermediate film layer 102 and the lower surface of the upper film layer 101 are bonded together, and the lower surface of the intermediate film layer 102 and the upper surface of the lower film layer 103 are bonded together, such that the three layers of the film 100 can be bonded together in a stacking manner. The intermediate film layer 102 is made of a high-hardness thermoplastic resin, so that the insulating composite film of the present application has better puncture resistance performance. The high-hardness thermoplastic resin refers to a thermoplastic resin having a certain hardness so that the resin has a certain puncture resistance performance. From the point of view of chemical structure, the high-hardness thermoplastic resin should have an excellent rigid functional group structure. For example, a polymer thermoplastic resin having a large quantity of phenyl groups in the main chain or having rich branched chains or having a high crosslinking density can meet the hardness requirements for the thermoplastic resin in the present application. In the present application, the high-hardness thermoplastic resin may be at least one of polymethyl methacrylate (PMMA), high-hardness polycarbonate (PC) or polyarylate (PAR) resin. As an example, the high-hardness thermoplastic resin may be a high molecular weight PMMA resin. The high molecular weight PMMA resin should have a suitable melt index (MI) to enable the production of the film 100 by an extrusion molding process. As an example, the high molecular weight PMMA resin has a melt index of 1-5 (230°C/3.8 kg). The flame retardant may be not added or added only in a small amount to the intermediate film layer 102. Since the flame retardant has a higher flame retardant efficiency in the film surface layer (upper layer and lower layer) than inside the film (intermediate layer), whether using a halogen-containing flame retardant or a halogen-free flame retardant, the film 100 of the present application can achieve the same or similar flame retardant performance to that of a single-layer insulating film. Since the flame retardant is relatively expensive in price, the present application allows the material cost of the insulating film to be significantly reduced.

In the embodiment shown in FIG. 1, the film 100 has a thickness of 0.1-1.0 mm. In one example, the film 100 has a thickness of 0.1-0.5 mm. In another example, the film 100 has a thickness of 0.1-0.35 mm. In yet another example, the film 100 has a thickness of 0.1-0.25 mm.

The inventors have found that since a high-hardness thermoplastic resin as an intermediate layer is composited in the insulating film 100 of FIG. 1, when the insulating film of FIG. 1 has a thickness smaller than that of an insulating film of a single-layer structure, it can still have a comparable or even better puncture resistance strength than that of a thicker single-layer structure. Therefore, the structure of an electronic device or component using the insulating film 100 of FIG. 1 can be more compact, has a higher space design freedom, and has a reduced cost. For example, when the insulating film 100 of FIG. 1 is used for a power adapter of a notebook computer, it is advantageous to promote the lightening and thinning of the notebook computer. The lightening and thinning of the notebook computer rely on the technological advancement of heat-generating components such as CPUs, motherboards and batteries, and material innovations in the main structure, such as magnesium-aluminum and carbon fiber material application, and are also closely linked to innovations in some auxiliary materials. The power adapter of the notebook computer uses an insulating film as an auxiliary material to achieve the insulation between electronic elements. Reducing the thickness of the insulating film can allow the structure of the power adapter to be compact and conforms to the lightening and thinning trend of notebook computers. However, when the puncture resistance strength of the insulating film is detected, the insulating film is pierced with a sharp object (similar to a pin of an electronic element), and when the power adapter is used, a situation inevitably occurs in which the power adapter is subjected to collision, thereby causing the pin of an electronic element in the power adapter to puncture the insulating film, and therefore the insulating film used is required to have a good puncture resistance strength. A single-layer insulating film made of a halogen-free flame-retardant PC is generally used. In view of ensuring sufficient puncture resistance strength, the thickness of the single-layer insulating film of halogen-free flame-retardant PC generally used is 0.4 mm or more, usually 0.43 mm. However, with the development of the lightening and thinning trend of notebook computers, such insulating films are increasingly unable to meet the design requirements of the power adapters of notebook computers. It is desirable to provide a novel flame-retardant insulating film which has the same puncture resistance performance as that of a 0.43 mm single-layer halogen-free flame retardant PC while having a thickness of less than 0.40 mm which is as small as possible. In the case of a thickness of less than 0.40 mm, the insulating film 100 of FIG. 1 of the present application still has the same or even better puncture resistance performance than that of the 0.43 mm single-layer halogen-free flame-retardant PC insulating film. Moreover, the insulating film 100 of FIG. 1 of the present application simultaneously satisfies the flame retardant and insulation performance required for the flame-retardant insulating film, the flame retardant performance thereof can reach UL94 V-2 or higher, such as V-0 rating, and the insulation performance thereof satisfies the standard for auxiliary or reinforced insulation in IEC62368 standard.

The inventors have pointed out that the high-hardness thermoplastic resin itself has a large hardness and is inferior in toughness, and thus generally does not have excellent puncture resistance performance. When it is needed to consider the production of a film having excellent puncture resistance performance, those skilled in the art do not use a high-hardness thermoplastic resin to prepare a film. However, unexpectedly, in the case where the insulating composite film of the present application comprises a high-hardness thermoplastic resin layer, the puncture resistance performance of the insulating composite film is not caused to be deteriorated, and instead, the insulating composite film obtains excellent puncture resistance. This is because the present application uses at least one of the PC, PP and PET materials having better toughness to prepare at least one layer of the insulating composite film of the present application, and uses the high-hardness thermoplastic resin material to prepare at least one other layer of the insulation composite film of the present application. The layer made of at least one of the PC, PP and PET materials having better toughness is not easily punctured when the insulating composite film of the present application is pierced with a sharp object, and the layer made of a thermoplastic resin material having a higher hardness makes the insulating composite film of the present application more resistant to the puncturing force when being pierced with the sharp object, thereby further making the insulating composite film of the present application less likely to be punctured. Therefore, the insulating composite film of the present application obtains excellent puncture resistance performance due to the composite of a film layer made of at least one of PC, PP, and PET materials and a film layer made of a high-hardness thermoplastic resin material. Moreover, since the layer made of a thermoplastic resin material having a higher hardness makes the insulating composite film of the present application more resistant to the puncturing force when being pierced with the sharp object, the insulating composite film of the present application may have a thinner thickness compared with that of an insulating film made solely of at least one of PC, PP, and PET materials, but still has comparable or even better puncture resistance than that of the insulating film made solely of at least one of PC, PP, and PET materials.

Also, in one embodiment of the present application, the intermediate film layer is made of PMMA. The inventors pointed out that since PMMA is generally considered to be inferior in flame retardant effect, those skilled in the art will not use it for preparing an insulating film. However, surprisingly, the inventors of the present invention have found that when PMMA is used as the high-hardness intermediate layer in the insulating film 100 shown in FIG. 1 of the present application, the insulating film 100 of FIG. 1 of the present application still has good flame retardant performance, which even can reach the same flame retardant rating as that of a 0.43 mm single-layer halogen-free flame retardant PC. In one embodiment, the thickness of the intermediate film layer 102 is 6-20% of the total thickness of the film 100. In one embodiment, the thickness of the intermediate film layer 102 is 8-14% of the total thickness of the film 100. In one embodiment, when the thickness of the intermediate film layer 102 is less than 20% of the total thickness of the film 100, the film 100 has a flame retardant rating of at least V-2.

For the film 100 of a three-layer structure, the thickness of the upper film layer 101 and the thickness of the lower film layer 103 may be the same or different. When the thickness of the upper film layer 101 is different from the thickness of the lower film layer 103, in one embodiment, the thickness of the upper film layer is 10-30% of the total thickness of the film 100, and the thickness of the lower film layer is 50-84% of the total thickness of the film 100.

In one embodiment, the film 100 may further comprise an additional resin layer between the upper film layer 101 and the lower film layer 103 such that the film 100 has a structure of four or more layers. The insulating film having a structure of four or more layers comprises at least one layer made of a high-hardness thermoplastic resin, and the at least one layer made of a high-hardness thermoplastic resin may be, for example, located between the upper film layer 101 and the lower film layer 103.

The performance characteristics of the insulating film 100 of FIG. 1 are illustrated below by Table 1. The insulating composite films in insulating composite film embodiments 1-4 in Table 1 all have a three-layer structure, their upper and lower layers are all made of a halogen-free flame-retardant PC, and their intermediate layers are all made of PMMA.

**Table 1**

| Sample name | Commercially available single-layer flame retardant PC | Single-layer PMMA | Insulating composite film embodiment 1 | Insulating composite film embodiment 2 | Insulating composite film embodiment 3 | Insulating composite film embodiment 4 |
|---|---|---|---|---|---|---|
| Total thickness | 0.43 mm | 0.43 mm | 0.30 mm | 0.25 mm | 0.25 mm | 0.43 mm |
| Proportion of the thickness of the intermediate layer to the total thickness | / | / | 9% | 9% | 20% | 30% |
| Proportion of the thickness of the upper layer to the total thickness | / | / | 45.5% | 45.5% | 40% | 35% |
| Proportion of the thickness of the lower layer to the total thickness | / | / | 45.5% | 45.5% | 40% | 35% |
| Puncture resistance strength/g | 59.4 | 34.8 | 66.4 | 60.9 | 54.6 | 56.7 |
| Flame retardancy (UL94) | V-0 | / | V-0 | VTM-0 | V-2 | V-2 |
| Breakdown voltage/KV | 20.3 | 20.1 | 18.5 | 17.6 | 17.4 | 20.2 |

The puncture resistance strength test method of the films in Table 1 above makes reference to a dart drop test method, and the higher the value, the better the puncture resistance effect. As shown in Table 1:
1. The single-layer PMMA film has poor puncture resistance performance, and its puncture resistance performance is not good even if it has a certain thickness such as reaching 0.43 mm. However, surprisingly, the insulating composite film of the present application obtains excellent puncture resistance performance in the case of having an intermediate layer made of a high-hardness thermoplastic resin. The puncture resistance of the insulating composite film of the present application is much better than the puncture resistance of the single-layer PMMA. The insulating composite film of the present application exhibits comparable or even better puncture resistance than that of a single-layer halogen-free flame retardant PP in the case of having the same thickness or less thickness than that of the single-layer halogen-free flame-retardant PC.
2. When the thickness of the intermediate layer made of the high-hardness thermoplastic resin in the insulating film is 9-20% of the total thickness of the insulating film, the insulating film has the best puncture resistance performance and its puncture resistance performance is even better than that of a single-layer halogen-free flame retardant PC with a larger thickness.
3. When the thickness of the intermediate layer made of the high-hardness thermoplastic resin in the insulating film is controlled to not exceed 20% of the total thickness, the flame retardant performance of the insulating film at least reaches V-2 rating, and can even reach V-0 rating.
4. Surprisingly, although the flame retardancy of PMMA is not good, the insulating film 100 shown in FIG. 1 obtained by compounding it as a high-hardness thermoplastic resin layer and a halogen-free flame-retardant PC material has an excellent flame retardant rating, which can reach V-2 or V-0 rating.
5. The insulating composite film of the present application has excellent insulation performance. Moreover, the insulation performance of the insulating composite film of the present application can satisfy the requirements of use environment when the thickness is very small.

Due to the above advantages, the insulating composite film 100 shown in FIG. 1 has excellent puncture resistance and flame retardant performance, and at the same time, the insulating composite film 100 shown in FIG. 1 has a smaller thickness; and therefore, when the insulating composite film 100 shown in FIG. 1 is used for an electronic device or component, the space of the electronic device or component can be saved, so that the design of the electronic device is more compact, and the space design of the electronic device or component is more free.

FIG. 2 shows a schematic cross-sectional view of an insulating composite film 200 according to another embodiment of the present application, and the only difference between the film 200 and the film 100 in FIG. 1 is that the film 200 only has an upper layer 201 and a lower layer 202 which are stacked. In this embodiment, the upper layer 201 is made of a high-hardness thermoplastic resin, and the thickness of the upper layer 201 is 6-20% of the total thickness of the film 200. The lower layer 202 is made of at least one of PP, PC, and PET resin materials. Also, in order to improve the flame retardant performance of the film 200, a flame retardant is added to the lower layer 202. The film 200 of a two-layer structure can achieve the same insulation and puncture resistance performance as those of the film 100 shown in FIG. 1, and the film of a two-layer structure can have a flame retardancy of V-2 rating.

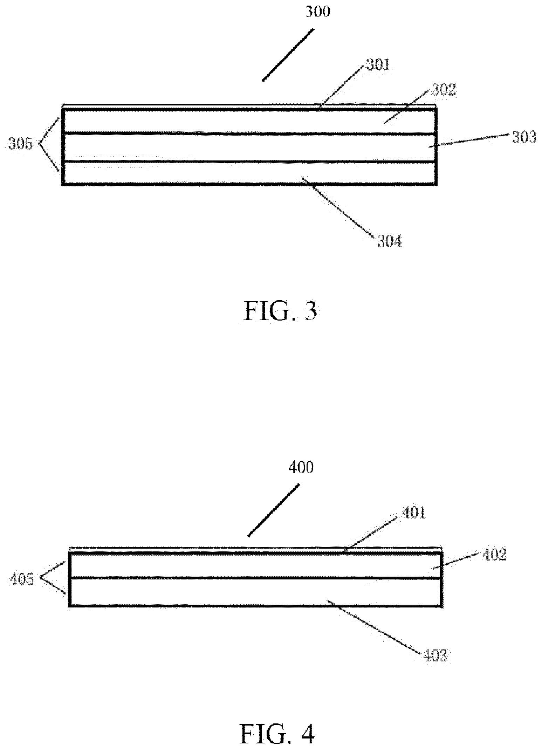

FIG. 3 shows a schematic cross-sectional view of an insulating composite film 300 of another embodiment of the present application, wherein the film 300 comprises a film base 305 and a coating layer 301, wherein the coating layer 301 is formed by coating a high-hardness thermosetting material on the upper surface of the film base 305. Similar to the high-hardness thermoplastic resin used to prepare the intermediate film layer 102 of the film 100 of FIG. 1, the high-hardness thermosetting material constituting the coating layer 301 of the film 300 also has a certain hardness, so that the film 300 can have excellent puncture resistance performance. As an example, the high-hardness thermosetting material may be an epoxy resin, an acrylate resin, a polyurethane resin, or a phenolic resin such as an acrylate UV lacquer.

The film base 305 may be made of a thermoplastic resin. The inventors have found that the film 300 has good insulation performance when the film base 305 is made of at least one of PP, PC, and PET resin materials. The film base 305 may have a structure of one layer and may also have a structure of two or more layers. When the film base 305 has a structure of two or more layers, the two or more layers are stacked and bonded to form a film base 305 by a casting and hot press molding process. In the embodiment shown in FIG. 3, the film base 305 has three layers that are sequentially bonded, namely an upper layer 302, an intermediate layer 303, and a lower layer 304. In the embodiment shown in FIG. 4, the film base 405 has two layers that are sequentially bonded, namely an upper layer 402 and a lower layer 403. In one embodiment, the film base 305 can be constructed as having at least one layer comprising a flame retardant to increase flame retardancy requirements. In one embodiment, the upper layer 302 and the lower layer 304 of the film base 305 contain a flame retardant, while the intermediate layer 303 does not contain a flame retardant. In one embodiment, both the upper layer 302 and the lower layer 304 of the film base 305 are made of a halogen-free flame retardant PC containing a halogen-free flame retardant, while the intermediate layer 303 is made of a PC that does not contain a flame retardant.

The coating layer 301 shown in FIG. 3 is obtained by a coating process. In one embodiment, a high-temperature melted thermosetting resin is coated on the surface of the film base 305, and the thermosetting resin is cured on the surface of the film base 305 as the temperature is lowered, thereby forming the coating layer 301. As shown in FIG. 3, the thickness of the coating layer 301 is much smaller than the thickness of the film base 305. In one embodiment, the film base 305 has a thickness of 0.1-0.25 mm, the coating layer 301 has a thickness of 3-7 µm, and the film 300 has a total thickness of about 0.25 mm.

In one embodiment, the thickness of the intermediate layer 303 is 30-50% of the total thickness of the film base 305. In another embodiment, the thickness of the intermediate layer 303 is 44% of the total thickness of the film base 305, and the thicknesses of the upper layer 302 and the lower layer 304 are both 28% of the total thickness of the film base 305.

The performance characteristics of the insulating film 300 of FIG. 3 will be described below by Table 2. The upper layer of the film base in Table 2 is a halogen-free flame-retardant PC, the intermediate layer is pure PC, the lower layer is a halogen-free flame-retardant PC, and the proportions of the thicknesses of the upper, intermediate and lower layers to the total thickness of the film base are 28%, 44%, and 28%, respectively. The film embodiment 5 in Table 2 has a coating layer coated on the upper surface of the upper film layer, and the coating layer is composed of an acrylate UV lacquer and has a thickness of 5 µm.

**Table 2**

| Sample name | Commercially available single-layer flame retardant PC | Film base | Insulating composite film embodiment 5 |
|---|---|---|---|
| Thickness | 0.43 mm | 0.25 mm | 0.25 mm |
| Puncture resistance strength/g | 59.4 | 49.6 | 59.8 |
| Flame retardancy (UL94) | V-0 | VTM-0 | VTM-0 |

The puncture resistance strength test method of the film in Table 2 above makes reference to a dart drop test method, and the higher the value, the better the puncture resistance effect.

As shown in Table 2, the insulating composite film embodiment 5 as shown in FIG. 3 of the present application has a thickness of only 0.25 mm, but has puncture resistance performance comparable to that of a single-layer flame retardant PC having a thickness of 0.43 mm, and achieves a flame retardant performance comparable to that of the single-layer flame retardant PC, for example up to UL94 VTM-2 (or V-2) or higher, such as VTM-0 (or V-0) rating. Therefore, the insulating composite film in embodiment 5 is superior in performance and small in thickness and is suitable for electronic elements having both puncture resistance and flame retardant performance requirements. The use of the insulating film can save space for electronic elements and make the design of electronic elements more compact.

FIG. 4 shows a schematic cross-sectional view of an insulating composite film 400 of another embodiment, and the only difference between the film 400 and the film 300 in FIG. 3 is that the film base 405 only has an upper layer 402 and a lower layer 403. In one embodiment, at least the lower layer 403 should contain a flame retardant depending on the requirements of use environment. The remainder is similar to the example shown in FIG. 3, and the embodiment shown in FIG. 4 meets the requirements for auxiliary insulation in IEC 62368 standard.

Further, in addition to the embodiments enumerated herein, it is also within the scope of the present application to provide the film base in three or more layers.

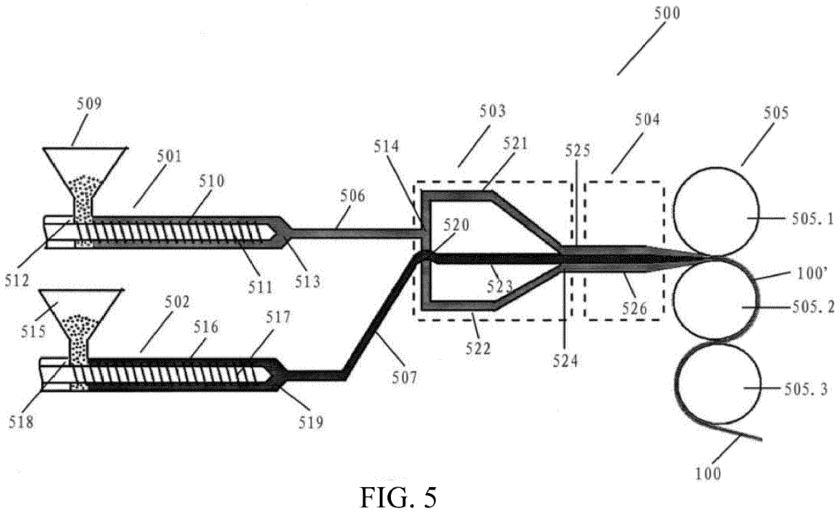

FIG. 5 schematically shows an extrusion molding line 500 of an extrusion molding process for producing the insulating composite film 100 according to an embodiment of the present application. As shown in FIG. 5, the extrusion molding line 500 comprises a first extruder 501 and a second extruder 502. The first extruder 501 comprises a feed hopper 509 and an accommodation cavity 510. The feed hopper 509 is used to contain PC particles containing a flame retardant. A drive screw 511 is provided in the accommodation cavity 510. The outlet of the feed hopper 509 is in communication with a front end inlet 512 of the accommodation cavity 510, a rear end outlet 513 of the accommodation cavity 510 is in communication with the inlet of a pipe 506, and the outlet of the pipe 506 is in communication with a first inlet 514 of a distributor 503. The second extruder 502 comprises a feed hopper 515 and an accommodation cavity 516. The feed hopper 515 is used to contain the PMMA particles. A drive screw 517 is provided in the accommodation cavity 516. The outlet of the feed hopper 515 is in communication with a front end inlet 518 of the accommodation cavity 516, a rear end outlet 519 of the accommodation cavity 516 is in communication with the inlet of a pipe 507, and the outlet of the pipe 507 is in communication with a second inlet 520 of the distributor 503.

The first inlet 514 of the distributor 503 is in communication with the inlet of a first branch pipe 521 of the distributor and the inlet of a second branch pipe 522, and the second inlet 520 of the distributor 503 is in communication with a part that a third branch pipe 523 of the distributor enters. As shown in FIG. 5, the third branch pipe 523 is located between the first branch pipe 521 and the second branch pipe 522. The outlet of the first branch pipe 521, the outlet of the second branch pipe 522, and the outlet of the third branch pipe 523 meet at an outlet 524 of the distributor. The outlet 524 of the distributor is connected to the inlet of a pipe 525, and the outlet of the pipe 525 is connected to the inlet of a cavity 526 of a die 504. The cavity 526 of the die 504 has a suitable width and depth such that it is sufficient to accommodate the material conveyed from the distributor pipe, and the cavity 526 is flat such that the material conveyed from the conveyor pipe is mold pressed therein into a flat shape. The mold pressed material is conveyed from the outlet of the cavity 526 to forming roll equipment 505. The forming roll equipment 505 comprises a plurality of forming rolls placed close to each other. The material conveyed from the die cavity to the forming roll equipment is stretched, rolled and cooled between the plurality of forming rolls to achieve a desired thickness and be formed into a film. Such three forming rolls 505.1, 505.2 and 505.3 are shown in FIG. 5. In other embodiments it is also possible to have only two forming rolls or more than two forming rolls.

According to the extrusion molding line 500 shown in FIG. 5, the process for producing the insulating composite film 100 of the present application is as follows:
In the production process, the accommodation cavities 510 and 516 of the first extruder 501 and the second extruder 502 are heated, and the drive screws 511 and 517 of the first extruder 501 and the second extruder 502 are rotated.

The PC particles containing a flame retardant are added to the feed hopper 509 of the first extruder 501. The rotation of the drive screw 511 of the first extruder 501 pushes the PC particles containing a flame retardant in the feed hopper 509 into the accommodation cavity 510. Since the accommodation cavity 510 is heated, and the PC particles containing a flame retardant enter the accommodation cavity 510 and then generate heat due to friction, they are melted to be in a molten state. The PC containing a flame retardant in a molten state is conveyed toward the rear end outlet 513 of the accommodation cavity 510 under the influence of the propulsive force generated by the rotation of the drive screw 511. The propulsive force generated by the rotation of the driving screw 511 causes the PC containing a flame retardant in a molten state to flow out of the accommodation cavity 510 from the rear end outlet 513 of the melting cavity 510, and then enter the pipe 506 via the inlet of the pipe 506 in communication with the rear end outlet 513 of the accommodation cavity 510. The PC containing a flame retardant in a molten state flows out of the outlet of the pipe 506 to the first inlet 514 of the distributor 503. At the first inlet 514 of the distributor, the PC containing a flame retardant in a molten state is distributed into two streams, the first stream enters the first branch pipe 521 of the distributor to become a first molten flame-retardant PC, and the second stream enters the second branch pipe 522 of the distributor to become a second molten flame-retardant PC.

Similarly, PMMA particles are added to the feed hopper 515 of the second extruder 502. The rotation of the drive screw 517 of the second extruder 502 pushes the PMMA particles in the feed hopper 515 into the accommodation cavity 516. Since the accommodation cavity 516 is heated, and the PMMA particles enter the accommodation cavity 516 and then generate heat due to friction, they are melted to be in a molten state. The PMMA in a molten state is conveyed toward the rear end outlet 519 of the accommodation cavity 516 under the influence of the propulsive force generated by the rotation of the drive screw 517. The propulsive force generated by the rotation of the driving screw 517 causes the PMMA in a molten state to flow out of the accommodation cavity 516 from the rear end outlet 519 of the melting cavity 516, and then enter the pipe 507 via the inlet of the pipe 507 in communication with the rear end outlet 519 of the accommodation cavity 516. The PMMA in a molten state flows out of the outlet of the pipe 507, arrives at the second inlet 520 of the distributor 503, and enters the third branch pipe 523 of the distributor via the second inlet 520. It should be noted that this operation for PMMA particles is performed simultaneously with the above described operation for the PC particles containing a flame retardant.

The first molten flame-retardant PC entering the first branch pipe 521 of the distributor 503, the PMMA in a molten state entering the third branch pipe 523 of the distributor 503, and the second molten flame-retardant PC entering the second branch pipe 522 of the distributor meet at the outlet 524 of the distributor, thereby being stacked together, and enter the cavity 526 of the die 504 via a pipe 525 in communication with the outlet 521 of the distributor for compression molding into a flat melt within the cavity 526. The molded flat melt is conveyed to be between the forming rolls 505.1 and 505.2, and subjected to stretching and pressing forces applied thereto by the forming rolls 505.1 and 505.2 while being cooled by the forming rolls 505.1 and 505.2, so as to form a sheet or film 100' having a predetermined thickness. The film 100' continues to be fed between the forming rolls 505.2 and 505.3 for further cooling or annealing to form an insulating composite film 100 in accordance with one embodiment of the present application. As needed, the molded flat melt output from the die can be molded by only two forming rolls or more than two forming rolls.

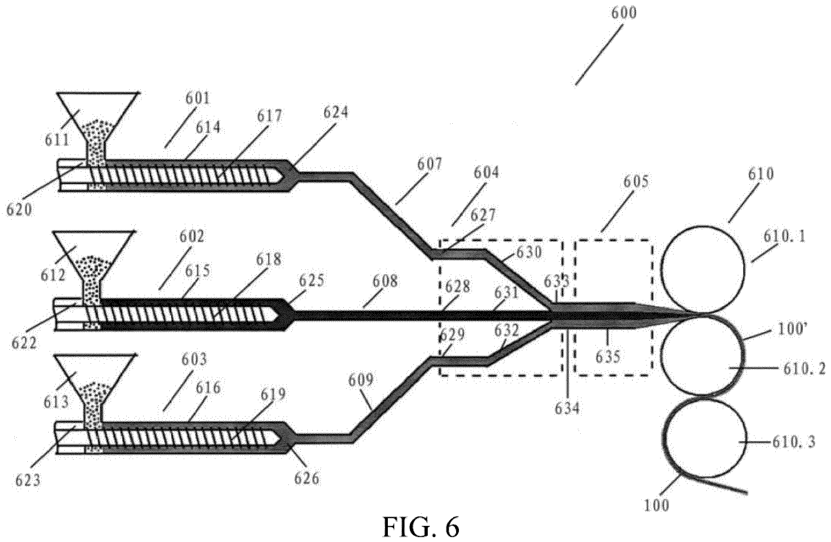

FIG. 6 shows a process line 600 of another extrusion molding process for producing an insulating composite film 100 according to an embodiment of the present application. As shown in FIG. 6, the extrusion molding line 600 comprises a first extruder 601, a second extruder 602, and a third extruder 603. The first extruder 601, the second extruder 602, and the third extruder 603 respectively comprise feed hoppers 611, 612 and 613, accommodation cavities 614, 615 and 616 and drive screws 617, 618 and 619. The feed hoppers of the first and third extruders 611 and 613 are used to contain PC particles containing a flame retardant, and the feed hopper of the second extruder 612 is used to contain PMMA particles. The outlet of the feed hopper 611 of the first extruder 601 is in communication with a front end inlet 620 of the accommodation cavity 614, a rear end outlet 624 of the accommodation cavity 614 is in communication with the inlet of a pipe 607, and the outlet of the pipe 607 is in communication with a first inlet 627 of a distributor 604. Similarly, the outlet of the feed hopper 612 of the second extruder 602 is in communication with a front end inlet 622 of the accommodation cavity 615, a rear end outlet 625 of the accommodation cavity 615 is in communication with the inlet of a pipe 608, and the outlet of the pipe 608 is in communication with a second inlet 628 of the distributor 604. The outlet of the feed hopper 613 of the third extruder 603 is in communication with a front end inlet 623 of the accommodation cavity 616, a rear end outlet 626 of the accommodation cavity 616 is in communication with the inlet of a pipe 609, and the outlet of the pipe 609 is in communication with a third inlet 629 of the distributor 604.

The first inlet 627 of the distributor 604 is in communication with the inlet of the first branch pipe 630 of the distributor, the second inlet 628 of the distributor 604 is in communication with the inlet of a second branch pipe 631 of the distributor, and the third inlet 629 of the distributor 604 is in communication with the inlet of a third branch pipe 632 of the distributor. As shown in FIG. 6, the second branch pipe 631 is located between the first branch pipe 630 and the third branch pipe 632. The outlet of the first branch pipe 630, the outlet of the second branch pipe 631, and the outlet of the third branch pipe 632 meet at an outlet 633 of the distributor. The outlet 633 of the distributor is in communication with the inlet of a pipe 634, and the outlet of the pipe 634 is connected to the inlet of a cavity 635 of a die 605. The cavity 635 of the die 605 has a suitable width and depth such that it is sufficient to accommodate the material conveyed from the distributor pipe, and the cavity 635 is flat such that the material conveyed from the conveyor pipe is mold pressed therein into a flat shape. The mold pressed material is conveyed from the outlet of the cavity 635 to forming roll equipment 610. The forming roll equipment 610 comprises a plurality of forming rolls placed close to each other. The material conveyed from the die cavity to the forming roll equipment is stretched, rolled and cooled between the plurality of forming rolls to achieve a desired thickness and be formed into a film. Such three forming rolls 610.1, 610.2 and 610.3 are shown in FIG. 6. In other embodiments it is also possible to have only two forming rolls or more than two forming rolls.

According to the extrusion molding line 600 shown in FIG. 6, the process for producing the insulating composite film 100 of the present application is as follows:
In the production process, the accommodation cavities 614, 615 and 616 of the first extruder 601, the second extruder 602, and the third extruder 603 are heated, and the drive screws 617, 618 and 619 of the first extruder 601, the second extruder 602 and the third extruder 603 are rotated.

The PC particles containing a flame retardant are added to the feed hopper 611 of the first extruder 601. The rotation of the drive screw 617 of the first extruder 601 pushes the PC particles containing a flame retardant in the feed hopper 611 into the accommodation cavity 614. Since the accommodation cavity 614 is heated, and the PC particles containing a flame retardant enter the accommodation cavity 614 and then generate heat due to friction, they are melted to be in a molten state. The PC containing a flame retardant in a molten state is conveyed toward the rear end outlet 624 of the accommodation cavity 614 under the influence of the propulsive force generated by the rotation of the drive screw 617. The propulsive force generated by the rotation of the driving screw 617 causes the molten state PC containing a flame retardant to flow out of the accommodation cavity 614 from the rear end outlet 624 of the melting cavity 614, and then enters the pipe 607 via the inlet of the pipe 607 in communication with the rear end outlet 624 of the accommodation cavity 614. The PC containing a flame retardant in a molten state flows out of the outlet of the pipe 607, arrives at the first inlet 627 of the distributor 604, and enters the first branch pipe 630 of the distributor 604, and the PC containing a flame retardant entering the first branch pipe 630 of the distributor 604 is a first molten flame-retardant PC.

Likewise, PC particles containing a flame retardant are added to the feed hopper 613 of the third extruder 603, the PC particles containing a flame retardant are sent to the third branch pipe 632 of the distributor 604 in the same way as that of the PC particles containing a flame retardant in the feed hopper 611 of the first extruder 601, and the PC containing a flame retardant entering the third branch pipe 632 of the distributor 604 is a second molten flame-retardant PC.

PMMA particles are added to the feed hopper 612 of the second extruder 602, and the PMMA particles are sent to the second branch pipe 631 of the distributor 604 in the same way as that of the PC particles containing a flame retardant in the feed hopper 611 of the first extruder 601.

It should be noted that the above operations of separately feeding the PC containing a flame retardant and PMMA to the first branch pipe 630, the second branch pipe 631, and the third branch pipe 632 of the distributor are simultaneously performed.

Similar to the extrusion process in the process line shown in FIG. 5, the first molten flame-retardant PC entering the first branch pipe 630 of the distributor 604, the PMMA in a molten state entering the second branch pipe 631 of the distributor 604, and the second molten flame-retardant PC entering the third branch pipe 632 of the distributor meet at the outlet 633 of the distributor, thereby being stacked together, and enter the cavity 635 of the die 605 via a pipe 634 in communication with the outlet 633 of the distributor for compression molding into a flat melt within the cavity 635. The molded flat melt is conveyed to be between the forming rolls 610.1 and 610.2, and subjected to stretching and pressing forces applied thereto by the forming rolls 610.1 and 610.2, so as to form a sheet or film 100' having a predetermined thickness. The film 100' continues to be fed between the forming rolls 610.2 and 610.3 for further cooling or annealing to form an insulating composite film 100 in accordance with one embodiment of the present application. As needed, the molded flat melt output from the die can be molded by only two forming rolls or more than two forming rolls.

Conventionally, the thickness of the intermediate layer of the product produced by the extrusion molding process has a higher percentage relative to the total thickness of the product. However, the insulating composite film produced by the extrusion molding process of the present application has a lower ratio of the thickness of the intermediate layer to the total thickness of the insulating composite film, and the thickness of the intermediate layer of the insulating composite film is only 6%-20% of the total thickness of the film. With the extrusion molding process of the present application, in the case where the ratio of the thickness of the intermediate layer to the total thickness of the insulating film is low, the layers can be uniformly distributed.

In the extrusion molding production processes shown in FIGS. 5 and 6, the first molten flame-retardant PC, the PMMA in a molten state, and the second molten flame-retardant PC are stacked together in the distributor. However, those skilled in the art will appreciate that the first molten flame-retardant PC, the PMMA in a molten state, and the second molten flame-retardant PC may also be stacked together in the die.

Although the insulating composite films 300 and 400 shown in FIGS. 3 and 4 are formed by applying an acrylate UV lacquer to the surface of the film base according to a standard operational flow of UV lacquer and then curing. As for the film base, the film base can be produced by a co-casting and hot pressing process. In the case where the film base is a multi-layer structure, the film base can also be produced by using an extrusion molding production process as shown in FIGS. 5 and 6.

The insulating composite film of the present application has a small thickness and at the same time has good flame retardancy and puncture resistance, and can be used for a circuit board of a power adapter, so that the power adapter has a more compact structure and a smaller volume. Since the insulating composite film of the present application has excellent puncture resistance, when the power adapter is dropped and impacted by an external force, the film is not easily punctured by the casing or the elements on the circuit board thereby causing a short circuit.

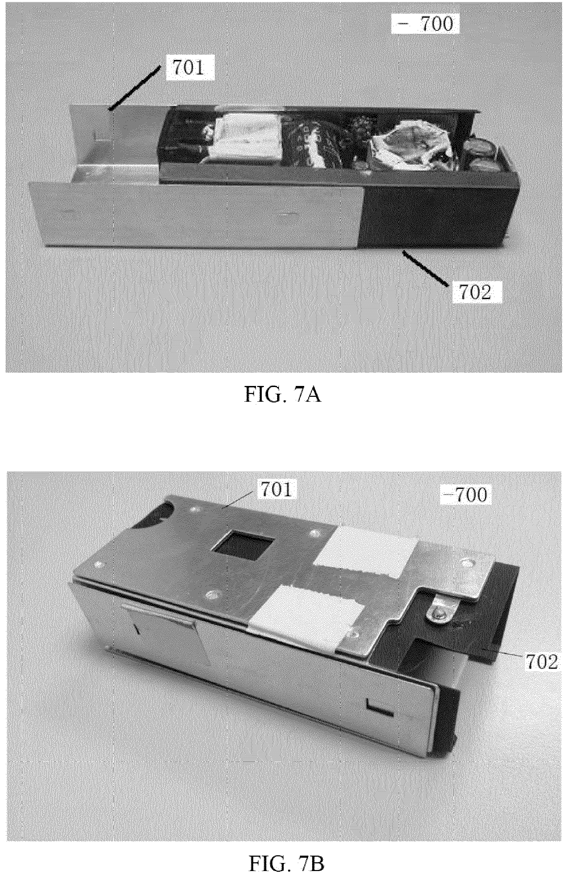

FIGS. 7A and 7B show an assembly structure of an electric component (power adapter or power supply) 700 using the insulating composite film 702 of the present application. As shown in FIG. 7A, a printed circuit board (not shown) is surrounded (or partially surrounded) by the composite insulating film 702 of the present application. Electronic elements and line components (such as resistors, capacitors, inductors, triodes, diodes, wires, and pins) are mounted on the printed circuit board. The insulating composite film 702 of the present application is surrounded by a shielding layer 701 (generally a metal sheet spacer layer) to prevent electromagnetic interference. As shown in FIG. 7B, the printed circuit board is surrounded (or partially surrounded) by the insulating composite film 702 of the present application and the shielding layer 701. The printed circuit board surrounded by the insulating composite film 702 of the present application and the shielding layer 701 is assembled into a casing (not shown) of the electric component. It should be noted that any electrical component the same or similar to the assembly structure of the electric component (power adapter or power supply) shown in FIGS. 7A and 7B can employ the insulating composite film of the present application.

Since the insulating composite film of the present application has a very small thickness, but has excellent puncture resistance performance, and at the same time has flame retardant and insulation performance satisfying requirements, using the insulating composite film of the present application in an electrical component (such as a power adapter or a power supply) makes the structure of the electrical component more compact and improves the space design freedom of the electrical component.

While only some of the features of the present application have been illustrated and described herein, various modifications and variations can be made by those skilled in the art. Therefore, it is to be understood that the appended claims are intended to cover all such modifications and variations which fall within the essential inventive scope of the invention.

## Claims

1. An insulating composite film (300, 400), comprising:
a film base (305, 405) made of at least one of polypropylene (PP), polycarbonate (PC), and polyethylene terephthalate (PET) materials,
wherein the insulating composite film further comprises a coating layer (301, 401) formed by coating a thermosetting material, selected from epoxy resins, acrylate resins, urethane resins, and phenolic resins, on an upper surface of the film base (305, 405), and
**characterized in that** the film base (305, 405) has a structure of one or more layers, and
wherein at least one layer of the film base (305, 405) contains a flame retardant, and the flame retardant is a halogen-containing flame retardant selected from a bromine-containing flame retardant or a chlorine-containing flame retardant, or is a halogen-free flame retardant selected from a phosphorus-containing flame retardant, a nitrogen-containing flame retardant, a sulfonate flame retardant, or a silicon-containing flame retardant.

2. The film (300, 400) as claimed in claim 1, **characterized in that**
the film base (305, 405) has a structure of two or more layers.

3. The film (300, 400) as claimed in claim 2, **characterized in that**
the film base (305, 405) has three layers that are sequentially bonded, including an upper layer (302), an intermediate layer (303), and a lower layer (304).

4. The film (300, 400) as claimed in claim 3, **characterized in that**
the upper layer (302) and the lower layer (304) of the film base (305, 405) contain a flame retardant, while the intermediate layer (303) does not contain a flame retardant.

5. The film (300, 400) as claimed in claim 3, **characterized in that**
the upper layer (302) and the lower layer (304) of the film base (305, 405) are made of a halogen-free flame retardant polycarbonate (PC) containing a halogen-free flame retardant, while the intermediate layer (303) is made of a polycarbonate (PC) that does not contain a flame retardant.

6. The film (300, 400) as claimed in claim 3, **characterized in that**
the thickness of the intermediate layer (303) of the film base (305, 405) is 30-50% of the total thickness of the film base (305, 405).

7. The film (300, 400) as claimed in claim 3, **characterized in that**
the thickness of the intermediate layer (303) of the film base (305, 405) is 44% of the total thickness of the film base (305, 405), and the thicknesses of the upper layer (302) and the lower layer (304) are each 28% of the total thickness of the film base (305, 405).

8. The film (300, 400) as claimed in claim 2, **characterized in that**
the film base (305, 405) has two layers that are sequentially bonded, including an upper layer (402) and a lower layer (403).

9. The film (300, 400) as claimed in claim 8, **characterized in that**
at least the lower layer (403) contains a flame retardant.

10. The film (300, 400) as claimed in claim 1, **characterized in that** the film base (305, 405) has a thickness of 0.1 mm-0.25 mm.

11. The film (300, 400) as claimed in claim 1, **characterized in that** the coating layer (301, 401) has a thickness of 3 µm-7 µm.

12. An electrical component (700), **characterized in that** the electrical component (700) comprises a casing and a printed circuit board located within the casing, electronic elements and line components are mounted on the printed circuit board, and the printed circuit board is surrounded or partially surrounded by an insulating composite film (702), and **characterized in that** the insulating composite film (702) comprises:
a film base (305, 405), made of polypropylene (PP), polycarbonate (PC) or polyethylene terephthalate (PET) material, wherein the film base (305, 405) has a structure of one or more layers, and wherein at least one layer of the film base (305, 405) contains a flame retardant, and the flame retardant is a halogen-containing flame retardant selected from a bromine-containing flame retardant or a chlorine-containing flame retardant, or is a halogen-free flame retardant selected from a phosphorus-containing flame retardant, a nitrogen-containing flame retardant, a sulfonate flame retardant, or a silicon-containing flame retardant; and
a coating layer (301, 401) formed by coating a thermosetting material, selected from epoxy resins, acrylate resins, urethane resins, and phenolic resins, on an upper surface of the film base (305, 405).

13. The electrical component (700) of claim 12, **characterized in that** the electrical component (700) is a power adapter or a power supply.

## Patentansprüche

1. Isolierverbundfolie (300, 400), aufweisend:
einen Folienträger (305, 405), der aus zumindest einem der Materialien Polypropylen (PP), Polycarbonat (PC) und Polyethylenterephthalat (PET) hergestellt ist,
wobei die Isolierverbundfolie ferner eine Beschichtungsschicht (301, 401) aufweist, die durch Beschichten eines wärmehärtenden Materials, ausgewählt aus Epoxidharzen, Acrylatharzen, Urethanharzen und Phenolharzen, auf einer oberen Fläche des Folienträgers (305, 405) gebildet wird, und
**dadurch gekennzeichnet, dass** der Folienträger (305, 405) eine Struktur aus einer oder mehreren Schichten aufweist, und
wobei zumindest eine Schicht des Folienträgers (305, 405) ein Flammschutzmittel enthält und das Flammschutzmittel ein halogenhaltiges Flammschutzmittel ist, das aus einem bromhaltigen Flammschutzmittel oder einem chlorhaltigen Flammschutzmittel ausgewählt ist, oder ein halogenfreies Flammschutzmittel ist, das aus einem phosphorhaltigen Flammschutzmittel, einem stickstoffhaltigen Flammschutzmittel, einem Sulfonat-Flammschutzmittel oder einem siliziumhaltigen Flammschutzmittel ausgewählt ist.

2. Folie (300, 400) nach Anspruch 1, **dadurch gekennzeichnet, dass**
der Folienträger (305, 405) eine Struktur aus zwei oder mehr Schichten aufweist.

3. Folie (300, 400) nach Anspruch 2, **dadurch gekennzeichnet, dass**
der Folienträger (305, 405) drei Schichten aufweist, die sequenziell miteinander verbunden sind, einschließlich einer oberen Schicht (302), einer Zwischenschicht (303) und einer unteren Schicht (304).

4. Folie (300, 400) nach Anspruch 3, **dadurch gekennzeichnet, dass**
die obere Schicht (302) und die untere Schicht (304) des Folienträgers (305, 405) ein Flammschutzmittel enthalten, während die Zwischenschicht (303) kein Flammschutzmittel enthält.

5. Folie (300, 400) nach Anspruch 3, **dadurch gekennzeichnet, dass**
die obere Schicht (302) und die untere Schicht (304) des Folienträgers (305, 405) aus einem halogenfreien flammhemmenden Polycarbonat (PC) hergestellt sind, das ein halogenfreies Flammschutzmittel enthält, während die Zwischenschicht (303) aus einem Polycarbonat (PC) hergestellt ist, das kein Flammschutzmittel enthält.

6. Folie (300, 400) nach Anspruch 3, **dadurch gekennzeichnet, dass**
die Stärke der Zwischenschicht (303) des Folienträgers (305, 405) 30-50 % der Gesamtstärke des Folienträgers (305, 405) beträgt.

7. Folie (300, 400) nach Anspruch 3, **dadurch gekennzeichnet, dass**
die Stärke der Zwischenschicht (303) des Folienträgers (305, 405) 44 % der Gesamtstärke des Folienträgers (305, 405) beträgt, und die Stärken der oberen Schicht (302) und der unteren Schicht (304) jeweils 28 % der Gesamtstärke des Folienträgers (305, 405) betragen.

8. Folie (300, 400) nach Anspruch 2, **dadurch gekennzeichnet, dass**
der Folienträger (305, 405) zwei Schichten aufweist, die sequenziell miteinander verbunden sind, einschließlich einer oberen Schicht (402) und einer unteren Schicht (403).

9. Folie (300, 400) nach Anspruch 8, **dadurch gekennzeichnet, dass**
zumindest die untere Schicht (403) ein Flammschutzmittel enthält.

10. Folie (300, 400) nach Anspruch 1, **dadurch gekennzeichnet, dass** der Folienträger (305, 405) eine Stärke von 0,1 mm - 0,25 mm aufweist.

11. Folie (300, 400) nach Anspruch 1, **dadurch gekennzeichnet, dass** die Beschichtungsschicht (301, 401) eine Stärke von 3 µm - 7 µm aufweist.

12. Elektrisches Bauteil (700), **dadurch gekennzeichnet, dass** das elektrische Bauteil (700) ein Gehäuse und eine innerhalb des Gehäuses angeordnete gedruckte Leiterplatte aufweist, elektronische Bauteile und Leitungsbauteile auf der gedruckten Leiterplatte montiert sind, und die gedruckte Leiterplatte von einer Isolierverbundfolie (702) umgeben oder teilweise umgeben ist, und **dadurch gekennzeichnet, dass** die Isolierverbundfolie (702) aufweist:
einen Folienträger (305, 405), hergestellt aus Polypropylen (PP), Polycarbonat (PC) oder Polyethylenterephthalat (PET), wobei der Folienträger (305, 405) eine Struktur aus einer oder mehreren Schichten aufweist, und wobei zumindest eine Schicht des Folienträgers (305, 405) ein Flammschutzmittel enthält, und das Flammschutzmittel ein halogenhaltiges Flammschutzmittel ist, ausgewählt aus einem bromhaltigen Flammschutzmittel oder einem chlorhaltigen Flammschutzmittel, oder ein halogenfreies Flammschutzmittel ist, ausgewählt aus einem phosphorhaltigen Flammschutzmittel, einem stickstoffhaltigen Flammschutzmittel, einem Sulfonat-Flammschutzmittel oder einem siliziumhaltigen Flammschutzmittel; und
eine Beschichtungsschicht (301, 401), gebildet durch Beschichten eines wärmehärtenden Materials, ausgewählt aus Epoxidharzen, Acrylatharzen, Urethanharzen und Phenolharzen, auf einer oberen Fläche des Folienträgers (305, 405).

13. Elektrisches Bauteil (700) nach Anspruch 12, **dadurch gekennzeichnet, dass** das elektrische Bauteil (700) ein Stromadapter oder eine Stromversorgung ist.

## Revendications

1. Film composite isolant (300, 400), comprenant :
une base de film (305, 405), faite d'au moins un parmi des matériaux en polypropylène (PP), en polycarbonate (PC) et en polyéthylène téréphtalate (PET),
dans lequel le film composite isolant comprend en outre une couche de revêtement (301, 401) formée par le revêtement d'un matériau thermodurcissable, sélectionné parmi les résines époxy, les résines acrylates, les résines uréthanes et les résines phénoliques, sur une surface supérieure de la base de film (305, 405), et
**caractérisé en ce que** la base de film (305, 405) a une structure d'une ou plusieurs couches, et
dans lequel au moins une couche de la base de film (305, 405) contient un ignifugeant, et l'ignifugeant est un ignifugeant contenant un halogène sélectionné parmi un ignifugeant contenant du brome ou un ignifugeant contenant du chlore, ou est un ignifugeant exempt d'halogène sélectionné parmi un ignifugeant contenant du phosphore, un ignifugeant contenant de l'azote, un ignifugeant sulfonate, ou un ignifugeant contenant un silicium.

2. Film (300, 400) selon la revendication 1, **caractérisé en ce que**
la base de film (305, 405) a une structure de deux couches ou plus.

3. Film (300, 400) selon la revendication 2, **caractérisé en ce que**
la base de film (305, 405) a trois couches qui sont liées séquentiellement, comprenant une couche supérieure (302), une couche intermédiaire (303) et une couche inférieure (304).

4. Film (300, 400) selon la revendication 3, **caractérisé en ce que**
la couche supérieure (302) et la couche inférieure (304) de la base de film (305, 405) contiennent un ignifugeant, tandis que la couche intermédiaire (303) ne contient pas d'ignifugeant.

5. Film (300, 400) selon la revendication 3, **caractérisé en ce que**
la couche supérieure (302) et la couche inférieure (304) de la base de film (305, 405) sont faites d'un polycarbonate ignifugeant exempt d'halogène (PC) contenant un ignifugeant sans halogène, tandis que la couche intermédiaire (303) est faite d'un polycarbonate (PC) qui ne contient pas d'ignifugeant.

6. Film (300, 400) selon la revendication 3, **caractérisé en ce que**
l'épaisseur de la couche intermédiaire (303) de la base de film (305, 405) est de 30 à 50 % de l'épaisseur totale de la base de film (305, 405).

7. Film (300, 400) selon la revendication 3, **caractérisé en ce que**
l'épaisseur de la couche intermédiaire (303) de la base de film (305, 405) est de 44 % de l'épaisseur totale de la base de film (305, 405), et les épaisseurs de la couche supérieure (302) et de la couche inférieure (304) sont chacune de 28 % de l'épaisseur totale de la base de film (305, 405).

8. Film (300, 400) selon la revendication 2, **caractérisé en ce que**
la base de film (305, 405) a deux couches qui sont liées séquentiellement, comprenant une couche supérieure (402) et une couche inférieure (403).

9. Film (300, 400) selon la revendication 8, **caractérisé en ce que**
au moins la couche inférieure (403) contient un ignifugeant.

10. Film (300, 400) selon la revendication 1, **caractérisé en ce que** la base de film (305, 405) a une épaisseur de 0,1 mm à 0,25 mm.

11. Film (300, 400) selon la revendication 1, **caractérisé en ce que** la couche de revêtement (301, 401) a une épaisseur de 3 µm à 7 µm.

12. Composant électrique (700), **caractérisé en ce que** le composant électrique (700) comprend un boîtier et une carte de circuit imprimé située à l'intérieur du boîtier, des éléments électroniques et des composants de ligne sont montés sur la carte de circuit imprimé, et la carte de circuit imprimé est entourée ou partiellement entourée par un film composite isolant (702), et **caractérisé en ce que** le film composite isolant (702) comprend :
une base de film (305, 405), constituée d'un matériau en polypropylène (PP), en polycarbonate (PC) ou en polyéthylène téréphtalate (PET), dans laquelle la base bdf (305, 405) a une structure d'une ou plusieurs couches, et dans laquelle au moins une couche de la base de film (305, 405) contient un ignifugeant, et l'ignifugeant est un ignifugeant contenant un halogène sélectionné parmi un ignifugeant contenant du brome ou un ignifugeant contenant du chlore, ou est un ignifugeant exempt d'halogène sélectionné parmi un ignifugeant contenant du phosphore, un ignifugeant contenant de l'azote, un ignifugeant sulfonate ou un ignifugeant contenant du silicium ; et
une couche de revêtement (301, 401) formée par le revêtement d'un matériau thermodurcissable, sélectionné parmi des résines époxy, des résines acrylates, des résines uréthanes, et des résines phénoliques, sur une surface supérieure de la base de film (305, 405).

13. Composant électrique (700) selon la revendication 12, **caractérisé en ce que** le composant électrique (700) est un adaptateur d'alimentation ou une alimentation électrique.
